# EUROPEAN PATENT SPECIFICATION

(11) **EP 3 539 684 B1**
(45) Date of publication and mention of the grant of the patent: **16.06.2021**
(21) Application number: 18764555.1
(22) Date of filing: 09.03.2018
(51) Int. Cl.: B21D 3/02, B21D 7/12, B21D 7/08

(54) **METHOD FOR CONTROLLING STEEL REINFORCEMENT STRAIGHTENING EQUIPMENT AND DEVICE THEREFOR**
VERFAHREN ZUR STEUERUNG EINER STAHLVERSTÄRKUNGSRICHTANLAGE UND VORRICHTUNG DAFÜR
PROCÉDÉ DE COMMANDE D'ÉQUIPEMENT DE REDRESSEMENT DE RENFORT EN ACIER ET DISPOSITIF ASSOCIÉ

(30) Priority: 10.03.2017 KR 20170030540
(43) Date of publication of application: 18.09.2019
(73) Proprietor: ROBOCON Technologies Corp., Gangseo-gu Busan (KR)
(72) Inventor: JO, Jun Ki, Changwon-si Gyeongsangnam-do 51607 (KR); HA, Youn Chul, Busan 49458 (KR); BAN, Chang Wan, Seoul 05507 (KR); LEE, Jung Sook, Busan 49314 (KR)
(74) Representative: FRKelly
(86) International application number: PCT/KR2018/002821
(87) International publication number: WO 2018/164531

(56) References cited:
- JP-A- 2011 092 990
- KR-A- 19980 068 600
- KR-A- 20120 074 480
- KR-B1- 101 139 596
- KR-B1- 101 379 438

## Description

### TECHNICAL FIELD

The present disclosure relates to a method and device for controlling steel reinforcement straightening equipment, and more particularly, to a method and device for automatically detecting bending in a steel bar output through steel reinforcement straightening equipment and automatically controlling the steel reinforcement straightening equipment.

### BACKGROUND ART

Steel reinforcement straightening equipment may include a plurality of rollers and may be largely classified into a roller pressing type and a rotary type. In both types, a steel bar is straightened by controlling the pressure of a roller. The steel bar output from steel reinforcement straightening equipment may be bent according to pressure applied to the roller. According to the related art, workers need to visually check bending in steel bars output through an outlet of the steel reinforcement straightening equipment and manually control the pressure applied to the roller. Documents which are considered as reciting the most appropriate prior art are: JP 2011 092990 and KR 1998 00608600.

### DESCRIPTION OF EMBODIMENTS

### TECHNICAL PROBLEM

Provided are a method and device for detecting bending in a steel bar using an imaging device and automatically controlling pressure applied to a roller of steel reinforcement straightening equipment.

### SOLUTION TO PROBLEM

According to an aspect of the present disclosure, a method of controlling steel reinforcement straightening equipment including a large pressure roll and a fine correction roll includes obtaining a first image and a second image by photographing a steel bar when the steel bar output through an outlet of the steel reinforcement straightening equipment passes each of two predetermined positions; identifying an area of a control map including a plurality of areas, the area of the control map being matched with a steel bar end point of the second image when a starting point of the control map is matched with a steel bar end point of the first image; and controlling the steel reinforcement straightening equipment based on a predetermined control value mapped to the identified area of the control map.

According to another aspect of the present disclosure, a device for controlling steel reinforcement straightening equipment includes a photographing unit configured to obtain a first image and a second image by photographing a steel bar when the steel bar output through an outlet of the steel reinforcement straightening equipment passes each of two predetermined positions; an area identification unit configured to identify an area of a control map including a plurality of areas, the area of the control map being matched with a steel bar end point of the second image when a starting point of the control map is matched with a steel bar end point of the first image; and a control unit configured to control the steel reinforcement straightening equipment based on a predetermined control value mapped to the identified area of the control map.

### ADVANTAGEOUS EFFECTS OF DISCLOSURE

According to embodiments, bending in a steel bar output from steel reinforcement straightening equipment may be corrected through automatic control. In addition, when at least two steel bars are simultaneously straightened in equipment, straightening control may be performed on these steel bars simultaneously.

### BRIEF DESCRIPTION OF DRAWINGS

FIG. 1 is a diagram illustrating the schematic configuration of an entire system for steel reinforcement straightening, according to an embodiment of the present disclosure.
FIG. 2 is a diagram illustrating an example of the detailed configuration of steel reinforcement straightening equipment used in an embodiment of the present disclosure.
FIG. 3 is a diagram illustrating the configuration of a control device according to an embodiment of the present disclosure.
FIG. 4 is a diagram illustrating an example of a steel bar output from steel reinforcement straightening equipment, according to an embodiment of the present disclosure.
FIG. 5 is a diagram illustrating an end point of a steel bar output from steel reinforcement straightening equipment, according to an embodiment of the present disclosure.
FIGS. 6 and 7 are diagrams illustrating examples of a control map, according to embodiments of the present disclosure.
FIG. 8 is a diagram illustrating an example in which a control map is matched with an end point of a steel bar, according to an embodiment of the present disclosure.
FIG. 9 is a flowchart of a method of controlling steel reinforcement straightening equipment, according to an embodiment of the present disclosure.

### MODE OF DISCLOSURE

Hereinafter, a method and device for controlling steel reinforcement straightening equipment according to embodiments will be described with reference to the accompanying drawings.

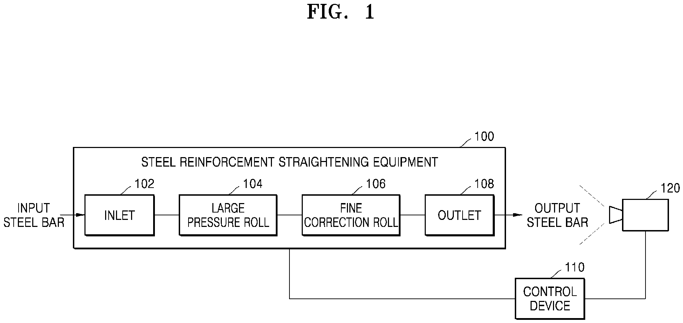

FIG. 1 is a diagram illustrating the schematic configuration of an entire system for steel reinforcement straightening, according to an embodiment of the present disclosure.

Referring to FIG. 1, steel reinforcement straightening equipment 100 mainly includes an inlet 102 through which a steel bar is input, a large pressure roll 104 and a fine correction roll 106 which straighten the steel bar, and an outlet 108 through which the steel bar is output. The large pressure roll 104 and the fine correction roll 106 include a plurality of rollers and straighten a steel bar by controlling a position and a pressure of each roller. The steel reinforcement straightening equipment 100 is just an example provided to promote understanding of the current embodiment, and the present disclosure is not limited thereto.

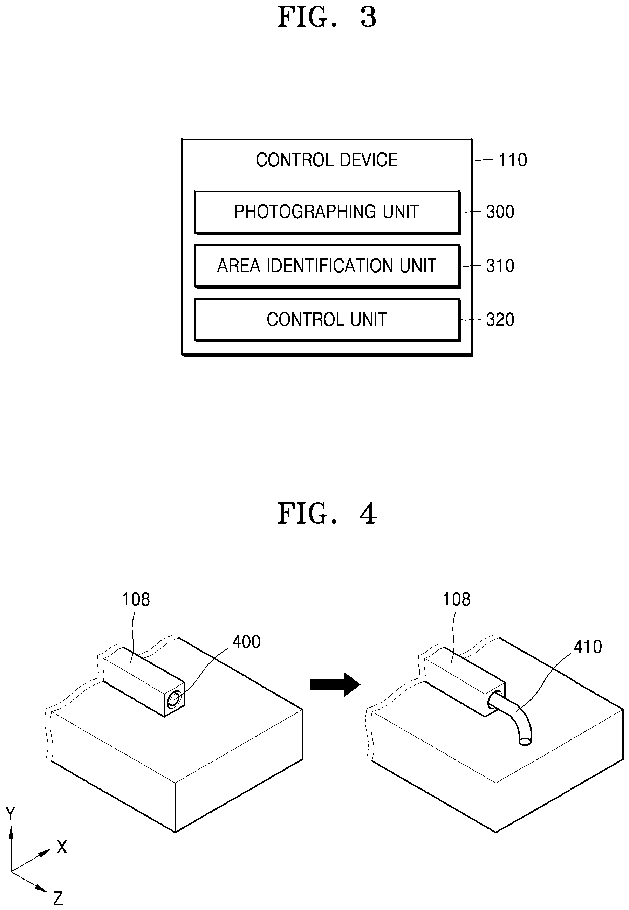

A control device 110 photographs a steel bar output from the steel reinforcement straightening equipment 100 using an imaging device 120, analyzes a captured image to automatically detect whether the steel bar is normally straightened or bent, and automatically generates a control signal when the steel bar is bent to control the large pressure roll 104 or the fine correction roll 106 of the steel reinforcement straightening equipment 100. The configuration of the control device 110 according to an embodiment is illustrated in FIG. 3.

The imaging device 120 captures a moving image or a still image. The imaging device 120 captures an image of an end point of a steel bar at a position separated from the outlet 108 by a certain distance. The imaging device 120 may be positioned at a side of the outlet 108 to detect bending in a steel bar but may be positioned at any place where bending in a steel bar may be detected.

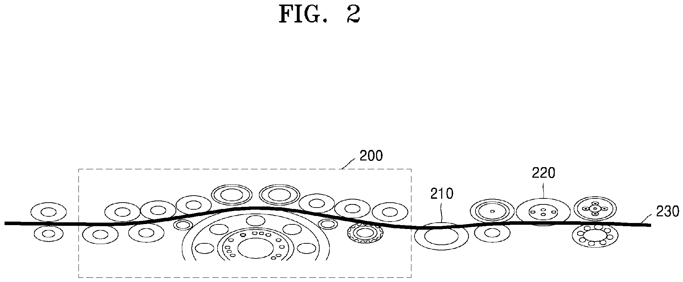

FIG. 2 is a diagram illustrating an example of the detailed configuration of steel reinforcement straightening equipment used in an embodiment of the present disclosure.

Referring to FIG. 2, the steel reinforcement straightening equipment includes a large pressure roll 200, which includes a plurality of rollers and applies large pressure to a steel bar 230, and a fine correction roll 210, 220, which may finely correct bending in the steel bar 230.

According to an embodiment, the steel reinforcement straightening equipment may include a pair of large pressure rolls 200 and a pair of fine correction rolls to simultaneously straighten two steel bars. The fine correction roll may include a left and right correction roll 210 moving left and right and an up and down correction roll 220 moving up and down. Bending in a steel bar output through the outlet 108 may be controlled via the left and right motion of the left and right correction roll 210 and the up and down motion of the up and down correction roll 220.

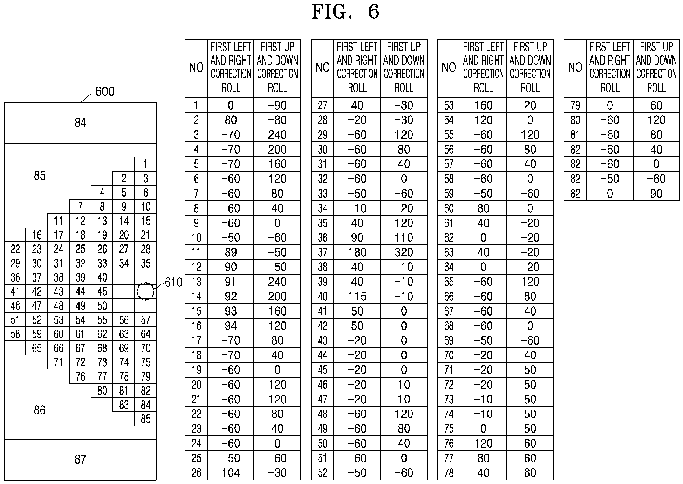

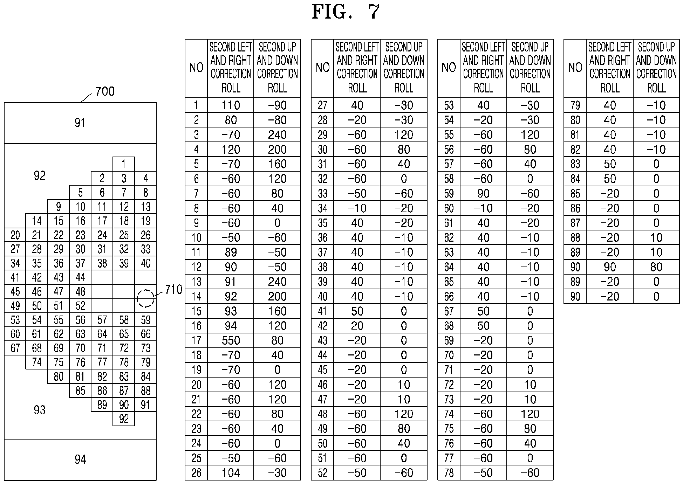

Effects of the motions of the left and right correction roll 210 and the up and down correction roll 220 on the steel bar 230 output through the outlet 108 may be determined in advance through experimental or empirical analysis. Accordingly, it is assumed in embodiments hereinbelow that a control value, which is input to each of the left and right correction roll 210 and the up and down correction roll 220 according to the amount of bending in the steel bar 230 output through the outlet 108, is predetermined, as shown in FIGS. 6 and 7.

FIG. 3 is a diagram illustrating the configuration of a control device according to an embodiment of the present disclosure.

Referring to FIGS. 1 and 3, the control device 110 of the steel reinforcement straightening equipment 100 includes a photographing unit 300, an area identification unit 310, and a control unit 320.

The photographing unit 300 photographs a steel bar output through the outlet 108 of the steel reinforcement straightening equipment 100. The photographing unit 300 may photograph a steel bar when the steel bar output through the outlet 108 of the steel reinforcement straightening equipment 100 passes each of at least two predetermined positions. For example, referring to FIG. 4, the photographing unit 300 may capture a first image when a steel bar 400 is output from the outlet 108 and a second image when a steel bar 410 is output from the outlet 108 by a certain length (e.g., 800 mm).

For example, the photographing unit 300 may receive a trigger signal for photographing from the steel reinforcement straightening equipment 100 to photograph two predetermined positions. When the steel reinforcement straightening equipment 100 detects that a steel bar reaches an end of the outlet 108 using a sensor at the end of the outlet 108, the steel reinforcement straightening equipment 100 may generate and transmit a trigger signal to the photographing unit 300. The steel reinforcement straightening equipment 100 may detect a rotation of a roller of either the large pressure roll 104 or the fine correction roll 106 and detects how long a steel bar is output from the end of the outlet 108. When the steel bar is output by a predetermined length, the steel reinforcement straightening equipment 100 may generate and transmit a trigger signal to the photographing unit 300. Besides the above, there may be various methods of photographing a steel bar at two positions using the photographing unit 300.

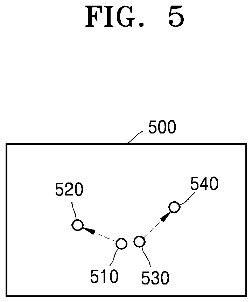

When the steel reinforcement straightening equipment 100 straightens two steel bars simultaneously, two steel bars may be output through the outlet 108 at a time, and bending may be different between the steel bars. For example, referring to FIG. 5, the photographing unit 300 may photograph end points 510 and 530 of the respective two steel bars when the steel bars are output from the outlet 108 and may newly photograph end points 520 and 540 of the respective steel bars when the steel bars are output from the outlet 108 by a certain length. Various image analysis methods according to the related art may be used to identify an end point of a steel bar in a captured image.

The area identification unit 310 may match a steel bar end point, which is identified in each of at least two images captured by the photographing unit 300, with a control map including a plurality of areas so as to identify a shift (i.e., bending) of the steel bar end point. Examples of the control map are illustrated in FIGS. 6 and 7.

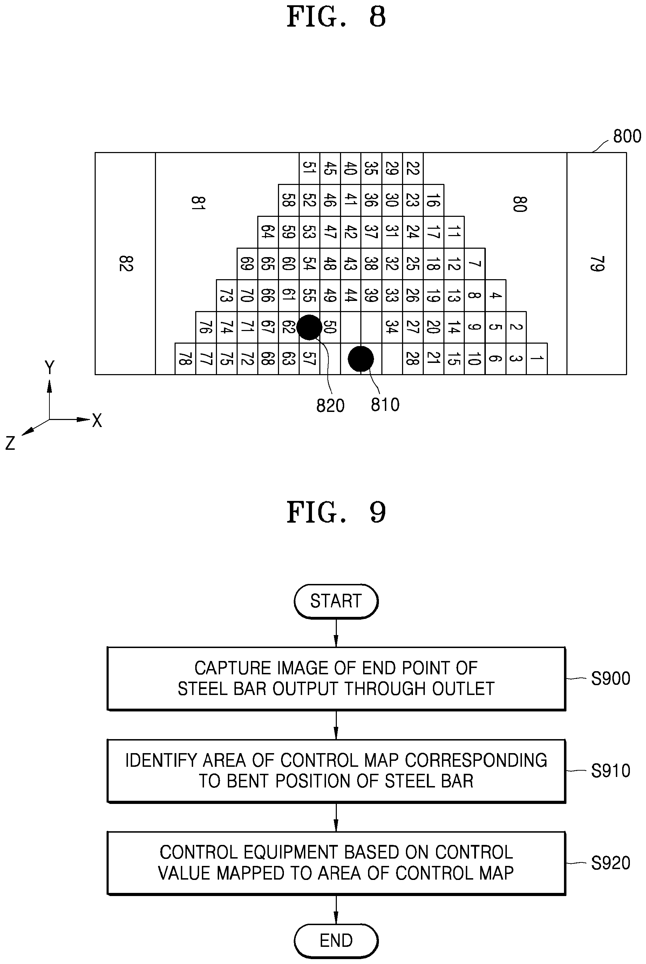

For example, the photographing unit 300 may capture a first image when a steel bar is output from the outlet 108 and a second image when the steel bar is output from the outlet 108 by a certain length (e.g., 800 mm). The area identification unit 310 matches a steel bar end point identified in the first image with a starting point 610 or 710 of a control map 600 or 700, which includes a plurality of areas as shown in FIG. 6 or 7, and identifies an area of the control map 600 or 700, which is matched with a relative position of a steel bar end point identified in the second image. An example of a method of matching a control map with a steel bar end point is provided in FIG. 8.

The control unit 320 identifies an area corresponding to a steel bar end point of the second image in a control map and controls the steel reinforcement straightening equipment 100 using a predetermined control value mapped to the area. As shown in FIG. 6 or 7, the control map 600 or 700 is divided into a plurality of areas, and a predetermined control value is mapped to each of the areas. Accordingly, as shown in FIG. 8, when a steel bar end point 810 of the first image coincides with the starting point 610 of the control map 600 and a steel bar end point 820 of the second image corresponds to area NO. 56 of the control map 600, the control unit 320 controls a left and right correction roll and an up and down correction roll using a predetermined control value of area NO. 56.

FIG. 4 is a diagram illustrating an example of a steel bar output from steel reinforcement straightening equipment, according to an embodiment of the present disclosure.

Referring to FIG. 4, when the steel bar 400 or 410 is output by a certain length from the outlet 108 of steel reinforcement straightening equipment, bending may occur. When bending occurs in the steel bar 410, the large pressure roll 104 or the fine correction roll 106 of the steel reinforcement straightening equipment 100 needs to be controlled. For example, bending in a steel bar may be corrected through a motion of a left and right correction roll or an up and down correction roll of the fine correction roll 106.

The control device 110 obtains an X-Y plane image of the outlet 108 from the imaging device 120 separated from the steel reinforcement straightening equipment 100 by a certain distance in a Z-axis direction. The X-Y plane image of the outlet 108 is used to identify a steel bar end point.

FIG. 5 is a diagram illustrating an end point of a steel bar output from steel reinforcement straightening equipment, according to an embodiment of the present disclosure.

Referring to FIGS. 1 and 5, when the steel reinforcement straightening equipment 100 straightens two steel bars simultaneously, the control device 110 photographs the outlet 108 of the steel reinforcement straightening equipment 100 using the imaging device 120 and identifies two steel bar end points 510 and 530 at the moment when steel bars are output from the outlet 108. The control device 110 newly identifies two steel bar end points 520 and 540 from an image captured when the steel bars output from the outlet 108 have a certain length.

When there is no bending in the steel bars, the steel bar end points 510 and 530 of the first image and the steel bar end points 520 and 540 of the second image exist within an error range. However, when bending occurs in any one of the steel bars, the steel bar end point 510 or 530 identified in the first image is at a different position than the steel bar end points 520 or 540 identified in the second image. When the amount of bending increases, a relative distance between the steel bar end point 510 or 530 of the first image and the steel bar end point 520 or 540 of the second image increases.

FIGS. 6 and 7 are diagrams illustrating examples of a control map, according to embodiments of the present disclosure.

FIGS. 6 and 7 show control maps of control values for a pair of fine correction rolls, respectively, when steel reinforcement straightening equipment straightens two steel bars at a time. For example, when the steel reinforcement straightening equipment includes a first fine correction roll (i.e., a first left and right correction roll and a first up and down correction roll) at an inner side and a second fine correction roll (i.e., a second left and right correction roll and a second up and down correction roll) at an outer side to straighten two steel bars, the control map 600 of FIG. 6 may be for control of the first fine correction roll at the inner side and the control map 700 of FIG. 7 may be for control of the second fine correction roll at the outer side.

Referring to FIGS. 6 and 7, each of the control maps 600 and 700 includes a plurality of areas for identifying the amount of bending in a steel bar. Each area of the control maps 600 and 700 is mapped to control values for a fine correction roll (including a left and right correction roll and an up and down correction roll). The control values for the fine correction roll are predetermined according to the characteristics of equipment.

Each of the control maps 600 and 700 includes the starting point 610 or 710 to match an output point of the outlet 108 with a first steel bar end point. When a steel bar is bent when the steel bar is output from the outlet 108, a second steel bar end point is relatively displaced from the first steel bar end point according to the amount of bending.

FIG. 8 is a diagram illustrating an example in which a control map is matched with an end point of a steel bar, according to an embodiment of the present disclosure.

Referring to FIG. 8, a control device matches a first steel bar end point 810 with a starting point of a control map 800. The first steel bar end point 810 is obtained when a steel bar is output from the outlet 108 of steel reinforcement straightening equipment. The control device identifies which area in the control map 800 is matched with a second steel bar end point 820 when the steel bar is output from the outlet 108 by a predetermined length.

In the current embodiment, when the control map 800 is the same as the control map 600 of FIG. 6, the area of the control map 800 matched with the second steel bar end point 820 is area NO. 56. Referring to FIG. 6, a control value matched with area NO. 56 for a first left and right correction roll is -60 and a control value matched with area NO. 56 for a first up and down correction roll is 80. The control device controls the steel reinforcement straightening equipment using the control values.

FIG. 9 is a flowchart of a method of controlling steel reinforcement straightening equipment, according to an embodiment of the present disclosure.

Referring to FIG. 9, a control device captures an image of a steel bar output through an outlet of steel reinforcement straightening equipment in operation S900. For example, the control device captures an image of a steel bar end point when the steel bar output through the outlet passes each of at least two predetermined positions.

The control device identifies a position of a steel bar end point from each of at least two captured images and matches steel bar end points with a control map based on a starting point of the control map in operation S910. For example, the control device matches a steel bar end point of a first captured image with the starting point of the control map and identifies which area of the control map is matched with a steel bar end point of an image captured afterward.

The control device controls the steel reinforcement straightening equipment using a control value set in the area of the control map, which is matched with a secondly photographed steel bar end point, in operation S920.

Embodiments can also be embodied as computer-readable code on a computer-readable recording medium. The computer-readable recording medium is any data storage device that can store data which can thereafter be read by a computer system. Examples of the computer-readable recording medium include read-only memory (ROM), random-access memory (RAM), CD-ROMs, magnetic tapes, floppy disks, optical data storage devices, etc. The computer-readable recording medium can also be distributed over network-coupled computer systems so that the computer-readable code is stored and executed in a distributed manner.

While the present disclosure has been particularly shown and described with reference to example embodiments thereof, it will be understood by those skilled in the art that various changes in form and details may be made therein without departing from the spirit and scope of embodiments as defined by the appended claims. The example embodiments should be considered in descriptive sense only and not for purposes of limitation. Therefore, the scope of embodiments is defined not by the detailed description of embodiments but by the appended claims, and all differences within the scope will be construed as being included in the present disclosure.

## Claims

1. A method of controlling steel reinforcement straightening equipment including a large pressure roll and a fine correction roll, the method comprising:
obtaining a first image and a second image by photographing a steel bar when the steel bar output through an outlet of the steel reinforcement straightening equipment passes each of two predetermined positions;
identifying an area of a control map including a plurality of areas, the area of the control map being matched with a steel bar end point of the second image when a starting point of the control map is matched with a steel bar end point of the first image; and
controlling the steel reinforcement straightening equipment based on a predetermined control value mapped to the identified area of the control map.

2. The method of claim 1, wherein the fine correction roll includes a fine correction roll and an up and down correction roll,
each of the plurality of areas of the control map is mapped to a control value for the left and right correction roll and a control value for the up and down correction roll, and
the controlling of the steel reinforcement straightening equipment includes controlling the left and right correction roll and the up and down correction roll based on control values mapped to the identified area of the control map.

3. The method of claim 1, wherein the steel reinforcement straightening equipment includes two fine correction rolls to receive and correct two steel bars simultaneously,
the obtaining of the first image and a second image includes obtaining the first image and the second image of each of the two steel bars output through the outlet,
the identifying of the area of the control map includes identifying an area of a first control map and an area of a second control map, which are mapped to different control values according to relative output positions of the respective two steel bars output from the outlet, and
the controlling of the steel reinforcement straightening equipment includes respectively controlling the two fine correction rolls using the different control values respectively mapped to the respective areas of the first and second control maps.

4. A device for controlling steel reinforcement straightening equipment, the device comprising:
a photographing unit configured to obtain a first image and a second image by photographing a steel bar when the steel bar output through an outlet of the steel reinforcement straightening equipment passes each of two predetermined positions;
an area identification unit configured to identify an area of a control map including a plurality of areas, the area of the control map being matched with a steel bar end point of the second image when a starting point of the control map is matched with a steel bar end point of the first image; and
a control unit configured to control the steel reinforcement straightening equipment based on a predetermined control value mapped to the identified area of the control map.

5. A computer-readable recording medium having recorded thereon a program to cause the device of claim 4 to execute the method of any one of claims 1 through 3.

## Patentansprüche

1. Verfahren zur Steuerung einer Stahlverstärkungsrichtanlage, die eine große Druckwalze und eine Feinkorrekturwalze beinhaltet, wobei das Verfahren Folgendes umfasst:
Erhalten eines ersten Bildes und eines zweiten Bildes durch Fotografieren eines Stahlstabs, wenn der durch einen Auslass der Stahlverstärkungsrichtanlage ausgegebene Stahlstab eine jeweilige zweier vorher festgelegter Positionen passiert;
Identifizieren eines Bereichs einer Steuerkarte, die eine Vielzahl von Bereichen beinhaltet, wobei der Bereich der Steuerkarte einem Stahlstabendpunkt des zweiten Bildes zugeordnet wird, wenn ein Startpunkt der Steuerkarte einem Stahlstabendpunkt des ersten Bildes zugeordnet ist; und
Steuern der Stahlverstärkungsrichtanlage auf Grundlage eines vorher festgelegten Steuerwerts, der dem identifizierten Bereich der Steuerkarte zugeordnet ist.

2. Verfahren nach Anspruch 1, wobei die Feinkorrekturwalze eine Feinkorrekturwalze und eine Aufwärts/Abwärts-Korrekturwalze beinhaltet,
jeder der Vielzahl von Bereichen der Steuerkarte einem Steuerwert für die Links/Rechts-Korrekturwalze und einem Steuerwert für die Aufwärts/Abwärts-Korrekturwalze zugeordnet ist und
das Steuern der Stahlverstärkungsrichtanlage ein Steuern der Links/Rechts-Korrekturwalze und der Aufwärts/Abwärts-Korrekturwalze auf Grundlage der Steuerwerte, die dem identifizierten Bereich der Steuerkarte zugeordnet sind, beinhaltet.

3. Verfahren nach Anspruch 1, wobei die Stahlverstärkungsrichtanlage zwei Feinkorrekturwalzen beinhaltet, um zwei Stahlstäbe gleichzeitig aufzunehmen und zu korrigieren,
das Erhalten des ersten Bildes und eines zweiten Bildes ein Erhalten des ersten Bildes und des zweiten Bildes für beide durch den Auslass ausgegebene Stahlstäbe beinhaltet,
das Identifizieren des Bereichs der Steuerkarte ein Identifizieren eines Bereichs einer ersten Steuerkarte und eines Bereichs einer zweiten Steuerkarte beinhaltet, die gemäß relativen Ausgabepositionen der entsprechenden beiden aus dem Auslass ausgegebenen Stahlstäbe unterschiedlichen Steuerwerten zugeordnet sind, und
das Steuern der Stahlverstärkungsrichtanlage ein jeweiliges Steuern der beiden Feinkorrekturwalzen unter Verwendung der unterschiedlichen Steuerwerte, die jeweils den entsprechenden Bereichen der ersten und zweiten Steuerkarte zugeordnet sind, beinhaltet.

4. Vorrichtung zur Steuerung einer Stahlverstärkungsrichtanlage, wobei die Vorrichtung Folgendes umfasst:
eine Fotografiereinheit, die dazu konfiguriert ist, ein erstes Bild und ein zweites Bild zu erhalten, indem sie einen Stahlstab fotografiert, wenn der durch einen Auslass der Stahlverstärkungsrichtanlage ausgegebene Stahlstab eine jeweilige zweier vorher festgelegter Positionen passiert;
eine Bereichsidentifizierungseinheit, die dazu konfiguriert ist, einen Bereich einer Steuerkarte, die eine Vielzahl von Bereichen beinhaltet, zu identifizieren, wobei der Bereich der Steuerkarte einem Stahlstabendpunkt des zweiten Bildes zugeordnet wird, wenn ein Startpunkt der Steuerkarte einem Stahlstabendpunkt des ersten Bildes zugeordnet ist; und
eine Steuereinheit, die dazu konfiguriert ist, die Stahlverstärkungsrichtanlage auf Grundlage eines vorher festgelegten Steuerwerts zu steuern, der dem identifizierten Bereich der Steuerkarte zugeordnet ist.

5. Computerlesbares Medium, auf dem ein Programm gespeichert ist, das die Vorrichtung nach Anspruch 4 dazu veranlasst, das Verfahren nach einem der Ansprüche 1 bis 3 auszuführen.

## Revendications

1. Procédé de commande d'équipement de redressement de renfort en acier comportant un rouleau de pression élevée et un rouleau de correction fine, le procédé comprenant :
l'obtention d'une première image et d'une seconde image en photographiant une barre d'acier lorsque la barre d'acier délivrée à travers une sortie de l'équipement de redressement de renfort en acier passe chacune des deux positions prédéterminées ;
l'identification d'une zone d'une carte de commande comportant une pluralité de zones, la zone de la carte de commande correspondant à un point d'extrémité de la barre d'acier de la seconde image lorsqu'un point de départ de la carte de commande correspond à un point d'extrémité de la barre d'acier de la première image ; et
la commande de l'équipement de redressement de renfort en acier sur la base d'une valeur de commande prédéterminée mise en correspondance avec la zone identifiée de la carte de commande.

2. Procédé selon la revendication 1, dans lequel le rouleau de correction fine comporte un rouleau de correction fine et un rouleau de correction vers le haut et le bas,
chacune de la pluralité de zones de la carte de commande est mise en correspondance avec une valeur de commande pour le rouleau de correction vers la gauche et la droite et une valeur de commande pour le rouleau de correction vers le haut et le bas, et
la commande de l'équipement de redressement de renfort en acier comporte la commande du rouleau de correction vers la gauche et la droite et du rouleau de correction vers le haut et le bas sur la base de valeurs de commande mises en correspondance avec la zone identifiée de la carte de commande.

3. Procédé selon la revendication 1, dans lequel l'équipement de redressement de renfort en acier comporte deux rouleaux de correction fine pour recevoir et corriger simultanément deux barres d'acier,
l'obtention de la première image et d'une seconde image comporte l'obtention de la première image et de la seconde image de chacune des deux barres d'acier délivrées à travers la sortie, l'identification de la zone de la carte de commande comporte l'identification d'une zone d'une première carte de commande et d'une zone d'une seconde carte de commande, qui sont mises en correspondance avec différentes valeurs de commande en fonction de positions de sortie relatives des deux barres d'acier respectives délivrées à travers la sortie, et
la commande de l'équipement de redressement de renfort en acier comporte la commande respectivement des deux rouleaux de correction fine en utilisant les différentes valeurs de commande respectivement mises en correspondance avec les zones respectives des première et seconde cartes de commande.

4. Dispositif de commande d'équipement de redressement de renfort en acier, le dispositif comprenant :
une unité de photographie conçue pour obtenir une première image et une seconde image en photographiant une barre d'acier lorsque la barre d'acier délivrée à travers une sortie de l'équipement de redressement de renfort en acier passe chacune des deux positions prédéterminées ;
une unité d'identification de zone conçue pour identifier une zone d'une carte de commande comportant une pluralité de zones, la zone de la carte de commande correspondant à un point d'extrémité de la barre d'acier de la seconde image lorsqu'un point de départ de la carte de commande correspond à un point d'extrémité de la barre d'acier de la première image ; et
une unité de commande conçue pour commander l'équipement de redressement de renfort en acier sur la base d'une valeur de commande prédéterminée mise en correspondance avec la zone identifiée de la carte de commande.

5. Support d'enregistrement lisible par ordinateur sur lequel est enregistré un programme pour amener le dispositif selon la revendication 4 à exécuter le procédé selon l'une quelconque des revendications 1 à 3.
